# EUROPÄISCHE PATENTANMELDUNG

(11) **EP 2 712 505 A1**
(43) Veröffentlichungstag der Anmeldung: **02.04.2014**
(21) Anmeldenummer: 12006805.1
(22) Anmeldetag: 28.09.2012
(51) Int. Cl.: A23G 3/00, A23G 3/16, A23G 3/34

(54) **Fondant mit einer nicht-kristallinen Phase, enthaltend Isomaltulose und Saccharose**

(71) Anmelder: Südzucker Aktiengesellschaft Mannheim/Ochsenfurt, 68165 Mannheim (DE)
(72) Erfinder: Marhöfer, Stephan, 67599 Gundheim (DE); Bernard, Jörg, 67283 Albsheim (DE)
(74) Vertreter: Wohlfahrt, Jan Günther

(57) **Zusammenfassung**

Die vorliegende Erfindung betrifft einen Fondant, umfassend ein Zuckersystem aus einer ersten nicht-kristallinen Phase und einer zweiten kristallinen Phase, wobei die nicht-kristalline Phase Isomaltulose und Saccharose enthält und wobei die kristalline Phase Isomaltulose enthält, ein Verfahren zu dessen Herstellung, die Verwendung des Fondants als Glasur, Überzug oder Füllung für Backwaren sowie Backwaren, die vollständig oder teilweise mit dem erfindungsgemä-βen Fondant überzogen sind.

## Beschreibung

Die vorliegende Erfindung betrifft einen Fondant, umfassend ein Zuckersystem aus einer ersten nicht-kristallinen Phase und einer zweiten kristallinen Phase, wobei die nicht-kristalline Phase Isomaltulose und Saccharose enthält und wobei die kristalline Phase Isomaltulose enthält, ein Verfahren zu dessen Herstellung, die Verwendung des Fondants als Glasur, Überzug oder Füllung für Backwaren sowie Backwaren, die vollständig oder teilweise mit dem erfindungsgemäßen Fondant überzogen sind.

Zur Herstellung herkömmlicher Gebäckglasuren wird Fondant oder Puderzucker eingesetzt. Die Zugabe weiterer Zusätze wie andere Zucker, Fett, Zuckeralkoholen, Verdickungsmittel, Emulgatoren, Farbstoffen, Aromen ist möglich.

Fondants sind weiche pastöse Zuckermassen, die entweder selbst zur Herstellung verschiedener Süßwaren, als Füllung oder als Glasur von Nahrungs- und Genussmitteln verwendet werden. Zur Herstellung eines Fondants werden beispielsweise Saccharose, Glucosesirup, Invertzuckercreme und/oder Zuckeralkohole und Wasser verwendet. Die Masse wird gekocht und dann durch starkes Kneten und schnelle Abkühlung zu einer weichen Paste verarbeitet. Anschließend können Aromen oder auch Lebensmittelfarben hinzugefügt werden. Fondant wird meist durch Übersättigung einer Zuckerlösung, insbesondere Saccharoselösung hergestellt. In heißem Wasser wird Saccharose im Überschuss gelöst, wobei der Zucker gelöst bleibt, wenn die Lösung abkühlt und sich so eine übersättigte Lösung bildet. Werden zu einer übersättigten Lösung Impfkristalle gegeben, kristallisiert die gelöste Saccharose aus.

Ein Fondant umfasst somit vor seiner Verwendung zum Beispiel als Glasur auf eine Backware ein zweiphasiges Zuckersystem aus einer zuckerhaltigen flüssigen, also nicht-kristallinen Phase und einer Phase aus kristallinem Zucker. Im Stand der Technik wird der kristalline Zucker im Fondant durch ein Auskristallisieren aus der flüssigen Phase erzeugt.

Fondantglasur wird häufig zum Glasieren von Backwaren oder Siedegebäck, beispielsweise Donuts, verwendet. Wird hierbei ein Fondant auf reiner Saccharosebasis eingesetzt, ist die Lagerstabilität beziehungsweise Haltbarkeit des Gebäcks stark begrenzt, da Saccharose hygroskopisch wirkt und die Glasur daher während der Lagerung klebrig wird. Neben Fondants aus Saccharose sind im Stand der Technik auch Fondants aus Trehalose bekannt. Durch einen hohen Wassergehalt neigt die Trehalose als Feststoff jedoch zur Verklumpung und ist daher bei der Verarbeitung nachteilig.

Die DE 10 2010 055 577 A1 beschreibt einen Isomaltulose-haltigen Fondant mit einer nicht-kristallinen Phase aus Glucosesirup. Die JP H8-89175 A beschreibt verschiedene Fondants auf Basis von Isomaltulose oder Isomalt.

Zusammengefasst können herkömmliche Glasuren klebrig werden, da die Feuchtigkeit vom Gebäck in die Glasur wandert, und/ oder aufgrund der hygroskopischen Eigenschaft der Saccharose und anderen Zucker (Fructose, Glucose) die Umgebungsfeuchte der Verpackung aufgenommen wird. Wird die Glasur klebrig, läuft sie vom Gebäck ab und sammelt sich am Boden der Verpackung was die mikrobiologische Stabilität herabsetzt. Auch kann dadurch das Gebäck trocken werden. Auch können herkömmliche transparente Glasuren nicht transparent bleiben, da die Feuchtigkeit von der Glasur zu einem süßen Gebäck, zum Beispiel einem Donut wandert, so dass die Löslichkeit der Zucker in der Glasur herabgesetzt wird und es zu einer Kristallisation der vorhandenen Zuckers (Blooming) und damit zu einer Eintrübung kommen kann.

Das der vorliegenden Erfindung zugrunde liegende technische Problem liegt daher insbesondere darin, die vorgenannten Nachteile zu überwinden, insbesondere einen Fondant bereitzustellen, der nach Verwendung, zum Beispiel als Glasur, eine hohe Lagerstabilität und eine geringe Hygroskopizität aufweist, und der sich besonders dazu eignet, als wenig klebriger, bevorzugt glänzender transparenter Nahrungsmittelüberzug oder auch als Füllung eingesetzt zu werden. Das der vorliegenden Erfindung zugrunde liegende technische Problem liegt auch insbesondere darin, einen Fondant bereitzustellen, der zu eine transparente, insbesondere lang anhaltend transparente Glasur ermöglicht und verbesserte und vereinfachte Herstellverfahren für einen solchen Fondant. Dabei soll der Fondant bevorzugt eine genügende Süße aufweisen, insbesondere ohne dass zusätzliche Süßungsmittel dazu zwingend nötig sind.

Das technische Problem wird gelöst durch die Gegenstände der unabhängigen Ansprüche, insbesondere durch ein Fondant, umfassend eine erste nicht-kristalline Phase und eine zweite kristalline Phase, wobei die nicht-kristalline Phase Isomaltulose und Saccharose enthält und wobei die kristalline Phase Isomaltulose enthält.

Das technische Problem wird gelöst durch die Gegenstände der unabhängigen Ansprüche, insbesondere durch ein Fondant, umfassend ein Zuckersystem aus einer ersten nicht-kristallinen Phase und eine zweiten kristallinen Phase, wobei die nicht-kristalline Phase Isomaltulose und Saccharose enthält und wobei die kristalline Phase Isomaltulose enthält.

In einer bevorzugten Ausführungsform beträgt das Mengenverhältnis der Isomaltulose und der Saccharose in der nicht-kristallinen Phase (bezogen auf das Gesamtgewicht der Isomaltulose und Saccharose in der nicht-kristallinen Phase) von 20 zu 80 bis 45 zu 55. In einer bevorzugten Ausführungsform beträgt das Mengenverhältnis der Isomaltulose und der Saccharose in der nicht-kristallinen Phase (bezogen auf das Gesamtgewicht der Isomaltulose und Saccharose in der nicht-kristallinen Phase) von 25 zu 75 bis 45 zu 55. In einer bevorzugten Ausführungsform beträgt das Mengenverhältnis der Isomaltulose und der Saccharose in der nicht-kristallinen Phase (bezogen auf das Gesamtgewicht der Isomaltulose und Saccharose in der nicht-kristallinen Phase) von 20 zu 80 bis 40 zu 60. In einer bevorzugten Ausführungsform beträgt das Mengenverhältnis der Isomaltulose und der Saccharose in der nicht-kristallinen Phase (bezogen auf das Gesamtgewicht der Isomaltulose und Saccharose in der nicht-kristallinen Phase) von 25 zu 75 bis 40 zu 60. In einer bevorzugten Ausführungsform beträgt das Mengenverhältnis der Isomaltulose und der Saccharose in der nicht-kristallinen Phase (bezogen auf das Gesamtgewicht der Isomaltulose und Saccharose in der nicht-kristallinen Phase) von 25 zu 75 bis 35 zu 65.

In einer bevorzugten Ausführungsform beträgt das Mengenverhältnis der Isomaltulose und der Saccharose im Fondant (bezogen auf das Gesamtgewicht der Isomaltulose und Saccharose im Fondant) mindestens 25 zu 75. In einer bevorzugten Ausführungsform beträgt das Mengenverhältnis der Isomaltulose und der Saccharose im Fondant (bezogen auf das Gesamtgewicht der Isomaltulose und Saccharose im Fondant) höchstens 85 zu 15. In einer bevorzugten Ausführungsform beträgt das Mengenverhältnis der Isomaltulose und der Saccharose im Fondant (bezogen auf das Gesamtgewicht der Isomaltulose und Saccharose im Fondant) von 25 zu 75 bis 85 zu 15.

In einer bevorzugten Ausführungsform beträgt das Mengenverhältnis der Isomaltulose und der Saccharose im Fondant (bezogen auf das Gesamtgewicht der Isomaltulose und Saccharose im Fondant) mindestens 30 zu 70. In einer bevorzugten Ausführungsform beträgt das Mengenverhältnis der Isomaltulose und der Saccharose im Fondant (bezogen auf das Gesamtgewicht der Isomaltulose und Saccharose im Fondant) höchstens 75 zu 25. In einer bevorzugten Ausführungsform beträgt das Mengenverhältnis der Isomaltulose und der Saccharose im Fondant (bezogen auf das Gesamtgewicht der Isomaltulose und Saccharose im Fondant) von 30 zu 70 bis 75 zu 25.

In einer bevorzugten Ausführungsform beträgt das Mengenverhältnis der Isomaltulose und der Saccharose im Fondant (bezogen auf das Gesamtgewicht der Isomaltulose und Saccharose im Fondant) höchstens 70 zu 30. In einer bevorzugten Ausführungsform beträgt das Mengenverhältnis der Isomaltulose und der Saccharose im Fondant (bezogen auf das Gesamtgewicht der Isomaltulose und Saccharose im Fondant) von 30 zu 70 bis 70 zu 30.

In einer bevorzugten Ausführungsform beträgt das Mengenverhältnis der Isomaltulose und der Saccharose im Fondant (bezogen auf das Gesamtgewicht der Isomaltulose und Saccharose im Fondant) mindestens 35 zu 65. In einer bevorzugten Ausführungsform beträgt das Mengenverhältnis der Isomaltulose und der Saccharose im Fondant (bezogen auf das Gesamtgewicht der Isomaltulose und Saccharose im Fondant) höchstens 65 zu 35. In einer bevorzugten Ausführungsform beträgt das Mengenverhältnis der Isomaltulose und der Saccharose im Fondant (bezogen auf das Gesamtgewicht der Isomaltulose und Saccharose im Fondant) von 35 zu 65 bis 65 zu 35.

In einer bevorzugten Ausführungsform beträgt das Mengenverhältnis der Isomaltulose und der Saccharose im Fondant (bezogen auf das Gesamtgewicht der Isomaltulose und Saccharose im Fondant) mindestens 50 zu 50. In einer bevorzugten Ausführungsform beträgt das Mengenverhältnis der Isomaltulose und der Saccharose im Fondant (bezogen auf das Gesamtgewicht der Isomaltulose und Saccharose im Fondant) höchstens 70 zu 30. In einer bevorzugten Ausführungsform beträgt das Mengenverhältnis der Isomaltulose und der Saccharose im Fondant (bezogen auf das Gesamtgewicht der Isomaltulose und Saccharose im Fondant) von 50 zu 50 bis 85 zu 15.

In einer bevorzugten Ausführungsform beträgt das Mengenverhältnis der Isomaltulose und der Saccharose im Fondant (bezogen auf das Gesamtgewicht der Isomaltulose und Saccharose im Fondant) mindestens 55 zu 45.

In einer bevorzugten Ausführungsform beträgt das Mengenverhältnis der Isomaltulose und der Saccharose in der nicht-kristallinen Phase (bezogen auf das Gesamtgewicht der Isomaltulose und Saccharose in der nicht-kristallinen Phase) von 20 zu 80 bis 45 zu 55, wobei gleichzeitig das Mengenverhältnis der Isomaltulose und der Saccharose im Fondant (bezogen auf das Gesamtgewicht der Isomaltulose und Saccharose im Fondant) von 30 zu 70 bis 85 zu 15 beträgt.

Im Zusammenhang mit der vorliegenden Erfindung addieren, soweit nicht anders angegeben und/oder erkenntlich, die für eine Zusammensetzung von Komponenten angegebenen prozentualen Anteile einzelner Komponenten auf 100 %, d. h. die Gesamtzusammensetzung, auf.

Im Zusammenhang mit der vorliegenden Erfindung wird unter einem "Fondant" eine zweiphasige Zuckerzusammensetzung verstanden, wobei die erste Phase eine nicht-kristalline Phase und die zweite Phase eine kristalline Phase ist. Ein Fondant ist erfindungsgemäß unter anderem zur Verwendung als Glasur oder Überzug für Lebensmittel, insbesondere Backwaren und Süßwaren verwendbar, wobei der Fondant dabei auf das Lebensmittel aufgetragen und anschließend getrocknet wird. Vor dieser Verwendung liegt der Fondant wie ausgeführt zweiphasig vor, wobei ein Fachmann die Mengenanteile der Phasen und der darin jeweils enthaltenen Kohlenhydrate, insbesondere Zucker wie Saccharose und Isomaltulose bestimmen kann. Nach dem Aufbringen und Trocknen wird der Fondant zu einer Glasur, die nicht mehr zweiphasig ist. Wenn nicht anders erwähnt wird im Zusammenhang mit dieser Erfindung unter "Fondant" die zweiphasige Zuckerzusammensetzung vor ihrer Verwendung als zum Beispiel Glasur beziehungsweise vor ihrem Trocknen verstanden.

Im Zusammenhang mit der vorliegenden Erfindung wird unter einem "Zuckersystem" ein Gemisch mindestens zwei unterschiedlicher Zucker verstanden. Im Zusammenhang mit der vorliegenden Erfindung wird unter einem "Zuckersystem aus einer kristallinen Phase und einer nicht-kristallinen Phase" ein Gemisch mindestens zweier Zucker verstanden, wobei einer der Zucker zumindest teilweise kristallin und mindestens ein weiterer Zucker zumindest teilweise, insbesondere überwiegend oder ganz nicht-kristallin, insbesondere als Sirup, Lösung, insbesondere gesättigten Lösung, vorliegt.

Es zeigte sich überraschender Weise, dass die gewünschten Glasureigenschaften durch ein geeignetes Mischungsverhältnis aus Isomaltulose und Saccharose unter Nutzung der physikalisch/chemischen Eigenschaften und insbesondere auch durch die Anwendung eines speziellen Herstellverfahrens verbessert werden können.

Es zeigte sich, dass durch den erfindungemäßen Fondant und das erfindungsgemäße Herstellverfahren eine Glasur erzeugt werden kann, die im verringerten Maße klebrig ist, die wahlweise auch transparent sein kann und bei der diese Eigenschaften im verpackten Zustand bis zu 8 Tagen erhalten bleiben.

Die geringe Löslichkeit eines Zuckers bewirkt einen hohen aw-Wert, eine reduzierte mikrobiologische Stabilität und ein erhöhtes Kristallisationsrisiko. Die hohe Löslichkeit eines Zuckers bewirkt einen niedrigen aw-Wert, eine erhöhte mikrobiologische Stabilität und ein reduziertes Kristallisationsrisiko.

Die geringe Hygroskopizität eines Zuckers bewirkt eine geringere Empfindlichkeit gegenüber erhöhter Luftfeuchte, eine geringere Klebrigkeit und eine verbesserte Verpackungsstabilität. Die hohe Hygroskopizität eines Zuckers bewirkt eine hohe Empfindlichkeit gegenüber erhöhter Luftfeuchte, eine hohe Klebrigkeit und eine reduzierte Verpackungsstabilität.

Es zeigte sich in überraschender Weise, dass über die in den erfindungsgemäßen Fondants verwendeten Isomaltulose/Saccharose-Verhältnisse der aw-Wert der aus den Fondants hergestellten Glasuren oder Überzüge verändert und eingestellt werden kann.

Es zeigte sich insbesondere in überraschender Weise, dass durch die in den erfindungsgemäßen Fondants verwendeten Isomaltulose/Saccharose-Verhältnissen die aus den Fondants hergestellten Glasuren oder Überzüge einen aw-Wert aufweisen, der dem von Gebäck ähnelt oder gleicht. Dadurch kann in vorteilhafter Weise die Feuchtigkeitswanderung von der Glasur/ dem Überzug zum Gebäck oder vom Gebäck zu der Glasur/ dem Überzug vermindert oder unterdrückt werden.

Die Wasseraktivität (auch aw-Wert oder Activity of Water) ist ein Maß für frei verfügbares Wasser in einem Material. Sie ist definiert als Quotient des Wasserdampfdrucks über einem Material (p) zu dem Wasserdampfdruck über reinem Wasser (p0) bei einer bestimmten Temperatur. Der aw-Wert wird normalerweise als ein Maß bezüglich der Haltbarkeit von Lebensmitteln gesehen und beeinflusst das Vorkommen der Mikroorganismen (Verderbniserreger), die unterschiedliche Ansprüche an frei verfügbares Wasser haben.

Gebäck, insbesondere Siedegebäck und Fettgebäck hat typischer weise einen aw-Wert von unter 0,95 und über 0,88. Donuts beispielsweise haben oft einen aw-Wert von etwa 0,91. Es zeigte sich nun, dass durch die erfindungemäßen verwendeten Isomaltulose/Saccharose-Verhältnisse im Fondant und insbesondere in der nicht-kristallinen Phase des Fondants Glasuren und Überzüge erhalten werden können, die einen solchen aw-Wert von unter 0,95 und über 0,88 aufweisen. Wird daher Gebäck, insbesondere Siedegebäck oder Fettgebäck, insbesondere Donuts, mit einem erfindungsgemäßen Fondant kombiniert, insbesondere wird der erfindungsgemäße Fondant auf solches Gebäck aufgetragen, wird ein Gebäck mit einer Glasur oder einem Überzug erhalten, bei dem sich die aw-Werte des Gebäcks und der Glasur beziehungsweise des Überzugs ähneln oder gleichen. Im Zusammenhang mit der vorliegenden Erfindung bedeuten "ähnliche aw-Werte" bevorzugt eine Differenz der aw-Werte von höchstens 0,03, besonders bevorzugt eine Differenz der aw-Werte von höchstens 0,02. Dadurch wird eine Wasserwanderung zwischen Glasur beziehungsweise Überzug und Gebäck verringert oder unterdrückt, so dass über einen längeren Zeitraum die Glasur weder klebrig wird noch auskristallisiert und das Gebäck auch nicht durch vermehrten Wasserentzug austrocknet. Dabei ist es insbesondere bei einer transparenten Glasur oder einem transparenten Überzug vorteilhaft, dass der enthaltene Zucker nicht auskristallisiert, da sonst die Transparenz verloren geht und die Glasur oder der Überzug intransparent und milchig wird.

Es ergibt sich somit der synergistische Effekt, dass die Glasur oder der Überzug bei der Lagerung einerseits weniger klebrig wird und andererseits bei bedarf transparent bleibt.

In einer bevorzugten Ausführungsform hat die nicht-kristallinen Phase des erfindungsgemäßen Fondants einen aw-Wert von unter 0,95. In einer bevorzugten Ausführungsform hat die nicht-kristallinen Phase des erfindungsgemäßen Fondants einen aw-Wert von über 0,87. In einer bevorzugten Ausführungsform hat die nicht-kristallinen Phase des erfindungsgemäßen Fondants einen aw-Wert zwischen 0,87 und 0,95. In einer bevorzugten Ausführungsform hat die nicht-kristallinen Phase des erfindungsgemäßen Fondants einen aw-Wert zwischen 0,89 und 0,93. In einer bevorzugten Ausführungsform hat die nicht-kristallinen Phase des erfindungsgemäßen Fondants einen aw-Wert von etwa 0,91.

Es zeigte sich überraschender Weise auch, dass der aw-Wert der nicht-kristallinen Phase nicht durch die Zugabe der Isomaltulose in der kristallinen Phase beeinflusst wird.

Es zeigte sich überraschender Weise auch, dass die erfindungsgemäß verwendeten Mengenanteile an Saccharose und Isomaltulose ausreichen um eine genügende Süße des Fondants zu erreichen. Erfindungsgemäße Fondants haben etwa 50 bis 70% der Süßkraft von Saccharose-basierten Fondants. Dies ergibt ein als angenehm und nicht zu schwach empfundene Süße, die nicht verstärkt werden muss. Dies ist bei der Verwendung von Trehalose nicht der Fall. Bei Bedarf kann die Süße aber auch durch Zugabe von zum Beispiel Fructose oder Süßungsmitteln verstärkt werden.

In einer bevorzugten Ausführungsform beträgt der Anteil der nicht-kristallinen Phase an der Gesamtkohlenhydratzusammensetzung des Fondants (Gewicht TS der nicht-kristallinen Phase bezogen auf Gesamtgewicht TS der Kohlenhydrate des Fondants) 30 bis 70 Gewichts-%.

Im Zusammenhang mit der vorliegenden Erfindung wird unter "TS" die Trockensubstanz verstanden. Im Zusammenhang mit der vorliegenden Erfindung wird unter "Gesamtgewicht TS der Kohlenhydrate" das Gesamtgewicht aller in dem jeweiligen Bezugsprodukt, also beispielsweise "nicht-kristalline Phase", "kristalline Phase" oder "Fondant", enthaltenen Zucker und Zuckeralkohole verstanden. Enthält das jeweilige Bezugsprodukt keine Zuckeralkohole wird unter "Kohlenhydrate" Zucker verstanden. Dementsprechend kann dann der Begriff "Gesamtgewicht TS der Kohlenhydrate" durch "Gesamtgewicht TS der Zucker" ersetzt werden.

Isomaltulose ist ein niedrig-glykämisches Saccharose-Isomer, das auch unter dem Namen Palatinose™ bekannt ist. Isomaltulose hat im Vergleich zu Saccharose eine Süßkraft von 40%. Die Löslichkeit von Isomaltulose beträgt 32g pro 100 g Wasser bei 20°C, wobei Saccharose eine Löslichkeit von 67g pro 100 g Wasser hat. Isomaltulose ist im Gegensatz zur Saccharose nur wenig hygroskopisch. Isomaltulose wird zumeist enzymatisch durch Fermentation hergestellt und wirkt akariogen. In bevorzugter Ausführungsform wird Isomaltulose in Form von kristalliner Isomaltulose verwendet, wobei diese in bevorzugter Form in pulveriger Form vorliegen kann. Besonders bevorzugt wird Palatinose™ PST-N, d. h. Isomaltulose mit einer Kristallteilchengröße von 90 Gew.-% < 0,7 mm, oder Palatinose™ PST-PA, d. h. eine Isomaltulose mit einer Kristallteilchengröße von 90 Gew.-% < 0,05 mm, verwendet. Alternativ kann auch Palatinose™ PST-PF, d. h. Isomaltulose mit einer Kristallteilchengröße 90 Gew.-% < 0,1 mm oder Palatinose™ PAP-N, d. h. Isomaltulose mit einer Kristallteilchengröße 90 Gew.-% < 0,7 mm, verwendet werden. Alternativ weist die Isomaltulose in der kristallinen Phase eine Kristallteilchengröße von 1 bis 100 µm, insbesondere 10 bis 90 µm, 20 bis 80 µm, 30 bis 80 µm, 40 bis 80 µm, insbesondere 50 bis 80 µm, besonders bevorzugt 10 bis 60 µm, inbesondere 20 bis 60 µm, insbesondere 30 bis 60 µm, vorzugsweise 10 bis 50 µm, insbesondere 20 bis 50 µm auf. Der erfindungsgemäße Fondant weist bevorzugt eine Kristallteilchengröße der Isomaltulose in der kristallinen Phase von 90 Gew.-% < 0,7 mm auf. Der erfindungsgemäße Fondant weist bevorzugt eine Kristallteilchengröße der Isomaltulose in der kristallinen Phase von 80 Gew.-% > 0,1 mm auf. Die Verwendung von kristalliner Isomaltulose dieser Partikelgrößen führt zu transparenten Fondants. Vorteilhafterweise neigt Isomaltulose als Feststoff mit diesen Kristallteilchengrößen weniger zum Verklumpen, da der Wassergehalt in einer Ausführungsform nur ca. 5 % beträgt. Dies ermöglicht eine bessere Verarbeitbarkeit verglichen mit der alleinigen Verwendung von Trehalose in einem Fondant, deren Wassergehalt 10 % betragen kann.

In einer bevorzugten Ausführungsform ist die kristalline Phase grobkörnig. Kleine Kristalle erniedrigen die Transparenz der Glasur während grobe Kristalle die Transparenz der Glasur erhöhen. Somit ist es wünschenswert eine grobkörnige kristalline Phase zu verwenden wenn eine transparente Glasur oder ein transparenter Überzug aus dem erfindungemäßen Fondant erhalten werden soll.

In einer bevorzugten Ausführungsform haben mindestens 50 Gewichts-%, mehr bevorzugt mindestens 75 Gewichts-% der Kristalle der kristallinen Phase eine Korngröße von mindestens 0,1 mm.

In einer bevorzugten Ausführungsform haben mindestens 80 Gewichts-% der Isomaltulose-Kristalle der kristallinen Phase eine Korngröße von mindestens 0,08 mm.

In einer bevorzugten Ausführungsform haben mindestens 80 Gewichts-% der Kristalle der kristallinen Phase eine Korngröße von mindestens 0,1 mm. In einer bevorzugten Ausführungsform haben mindestens 80 Gewichts-% der Isomaltulose-Kristalle der kristallinen Phase eine Korngröße von mindestens 0,1 mm.

Überraschenderweise wurde gefunden, dass der erfindungsgemäße Fondant in einer bevorzugten Ausführungsform eine besonders homogene, glänzende und transparente Glasur mit groben Kristallen auf Nahrungsmitteln, zum Beispiel Backwaren, insbesondere Siedegebäcken, ergibt. Auch bei einer Verwendung der Fondants bei 40 bis 55° C auf beispielsweise heißen Siedegebäcken wird ein schnelles Abtrocknen der Glasur auf dem Gebäck gewährleistet. Des Weiteren ist die Lagerstabilität des erfindungsgemäßen Fondants deutlich erhöht und die Hygroskopizität niedrig. Vorteilhafterweise zieht ein Überzug aus erfindungsgemäßem Fondant wenig bis gar kein Wasser aus dem Inneren des überzogenen Produkts und der Umgebungsluft. Bei Verwendung als Überzug, z. B. als Glazing, also transparenter Überzug, ergibt sich eine besonders geringe Klebrigkeit.

In einer bevorzugten Ausführungsform haben mindestens 90 Gewichts-% der Kristalle der kristallinen Phase eine Korngröße von höchstens 0,7 mm. In einer bevorzugten Ausführungsform haben mindestens 90 Gewichts-% der Isomaltulose-Kristalle der kristallinen Phase eine Korngröße von höchstens 0,7 mm.

In einer bevorzugten Ausführungsform enthält die nicht-kristalline Phase mindestens 20 Gewichts-% Isomaltulose (Gewicht TS der Isomaltulose in der nicht-kristallinen Phase bezogen auf Gesamtgewicht TS der Kohlenhydrate in der nicht-kristallinen Phase). In einer bevorzugten Ausführungsform enthält die nicht-kristalline Phase höchstens 45 Gewichts-% Isomaltulose (Gewicht TS der Isomaltulose in der nicht-kristallinen Phase bezogen auf Gesamtgewicht TS der Kohlenhydrate in der nicht-kristallinen Phase).

In einer bevorzugten Ausführungsform wird der Kohlenhydratanteil der nicht-kristallinen Phase zu mindestens 50 Gewichts-% aus einer Mischung aus Isomaltulose und Saccharose gebildet.

In einer bevorzugten Ausführungsform wird der Kohlenhydratanteil der kristallinen Phase zu mindestens 50 Gewichts-% aus Isomaltulose gebildet.

In bevorzugter Ausführungsform weist der Fondant als einzige Zucker Isomaltulose und Saccharose auf. In bevorzugter Ausführungsform weist der Fondant neben Isomaltulose und Saccharose keine weiteren Zucker oder nur Spuren von weiteren Zuckern auf.

In einer bevorzugten Ausführungsform enthält der Fondant höchstens 3 Gewichts-% Glucosesirup.

In einer alternativen Ausführungsform enthält der Fondant Fructose, bevorzugt in geringen Mengen. In einer bevorzugten Ausführungsform enthält der Fondant höchstens 3 Gewichts-% Fructose. Bei Bedarf kann durch die Fructose die Süßkraft verstärkt werden.

Der Fondant kann auch, bevorzugt in geringen Mengen, insbesondere in einer Menge von höchstens 3 Gewichts-% Polydextrose enthalten. Der Fondant kann auch, bevorzugt in geringen Mengen, insbesondere in einer Menge von höchstens 3 Gewichts-% Dextrine/Maltodextrine, zum Beispiel Nutriose^{®} enthalten.

In einer alternativen Ausführungsform enthält die kristalline Phase nur Spuren von Trehalose. In einer bevorzugten Ausführungsform enthält die kristalline Phase weniger als 1 Gew.-% Trehalose.

In einer bevorzugten Ausführungsform enthält die kristalline Phase keine Trehalose.

In einer bevorzugten Ausführungsform enthält der Fondant nur Spuren von Trehalose. In einer bevorzugten Ausführungsform enthält der Fondant weniger als 1 Gew.-% Trehalose. In einer bevorzugten Ausführungsform enthält der Fondant keine Trehalose.

In einer alternativen Ausführungsform kann der Fondant zusätzlich zu Isomaltulose auch Trehalose in der kristallinen Phase enthalten. In einer Ausführungsform kann der Fondant neben den vorgenannten Zuckern, nämlich Isomaltulose, Saccharose und Trehalose, weitere Zucker, z. B. Trehalulose, enthalten.

In einer bevorzugten Ausführungsform kann der Fondant zusätzlich zu Saccharose und Isomaltulose auch Trehalose in der nicht-kristallinen Phase enthalten.

In einer bevorzugten Ausführungsform enthält der Fondant keine Zuckeralkohole. In einer bevorzugten Ausführungsform enthält der Fondant nur Spuren von Zuckeralkoholen. Alternativ kann der Fondant aber auch Zuckeralkohole enthalten.

In einer bevorzugten Ausführungsform der vorliegenden Erfindung weist der Fondant keinen Süßkraftverstärker oder Intensivsüßstoff auf. In einer alternativen Ausführungsform der vorliegenden Erfindung weist der Fondant nur Spuren eines Süßkraftverstärkers oder Intensivsüßstoffs auf. In einer alternativen Ausführungsform der vorliegenden Erfindung weist der Fondant 0,0 bis 3,0 Gewichts-% mindestens eines Süßkraftverstärkers oder Intensivsüßstoffs (Gesamtgewicht Süßkraftverstärker bzw. Intensivsüßstoff bezogen auf Trockensubstanz des Fondants) auf.

Der erfindungsgemäße Fondant weist vorteilhafterweise dennoch ein Geschmacksprofil und vor allem eine Süßkraft auf, die ausreichend ist um konventionelle rein Saccharose-haltige Fondants zu ersetzen.

In einer bevorzugten Ausführungsform der vorliegenden Erfindung weist der Fondant keine Zuckeraustauschstoffe, insbesondere keine Zuckeralkohole, und/oder keine Intensivsüßstoffe auf oder enthält diese nur in Spuren.

Im Zusammenhang mit der vorliegenden Erfindung werden unter "Spuren" eines Stoffs bevorzugt Mengenanteile von unter 1 Gew.-%, insbesondere unter 0,9 Gew.-%, bevorzugt unter 0,01 Gew.-% verstanden.

In einer bevorzugten Ausführungsform enthält der Fondant 0,9 bis 50 Gewichts-% Wasser (bezogen auf Gesamtgewicht des Fondants). In einer bevorzugten Ausführungsform enthält der Fondant 5 bis 45 Gewichts-% Wasser (bezogen auf Gesamtgewicht des Fondants).

Der erfindungsgemäße Fondant enthält in besonders bevorzugter Ausführungsform 10 bis 40 Gewichts-%, bevorzugt 15 bis 35 Gewichts-%, besonders bevorzugt 10 bis 30, vorzugsweise 15 bis 30 Gewichts-%, insbesondere 15 bis 25 Gewichts-%, insbesondere 20 bis 25 Gewichts-% Wasser (bezogen auf das Gesamtgewicht des Fondants), insbesondere in der nicht-kristallinen Phase.

Der Mengenanteil an Wasser bezieht sich bevorzugt auf das hinzugefügte Wasser, nicht aber auf das in den Zuckern enthaltene Kristallwasser.

In einer bevorzugten Ausführungsform enthält der Fondant 0,01 bis 1,0 Gewichts-% (Gesamtgewicht Verdickungsmittel bezogen auf TS des Fondants) Verdickungsmittel. In einer bevorzugten Ausführungsform enthält der Fondant 0,01 bis 0,6 Gewichts-% (Gesamtgewicht Verdickungsmittel bezogen auf TS des Fondants) Verdickungsmittel. In einer bevorzugten Ausführungsform der vorliegenden Erfindung enthält der Fondant 0,01 bis 0,3 Gewichts-%, vorzugsweise 0,01 bis 0,2 Gewichts-%, insbesondere 0,01 bis 0,1 Gewichts-% (Gesamtgewicht Verdickungsmittel bezogen auf Trockensubstanz des Fondants) eines oder mehrerer Verdickungsmittel. Bevorzugt ist das Verdickungsmittel ausgewählt aus der Gruppe bestehend aus Agar, Carrageen und Xanthan. Besonders bevorzugt ist das Verdickungsmittel Agar. Die Verwendung von mindestens einem Verdickungsmittel ist insbesondere für die Verwendung des Fondants als Überzugsfondant von besonderer Vorteilhaftigkeit. Vorteilhafterweise wird die Rekristallisation von Komponenten des Zuckersystems verhindert und die Flexibilität und Stabilität des Überzugs gewährleistet, auch über einen längeren Zeitraum. Darüber hinaus führt die Verwendung mindestens eines Verdickungsmittels in vorteilhafter Weise zu einer verbesserten Bindung des Fondants an das Lebensmittel, insbesondere Gebäck. Auch kann dadurch die Bindung der Kristalle im Fondant verbessert werden.

In einer bevorzugten Ausführungsform enthält der Fondant 0,01 bis 3 Gewichts-% (bezogen auf TS des Fondants) mindestens eines lebensmittelverträglichen Konservierungsmittels, mindestens eines Aromas oder von beidem.

In einer bevorzugten Ausführungsform enthält der Fondant 0,01 bis 3 Gewichts-% (Gesamtgewicht Säure bezogen auf TS des Fondants) einer lebensmittelverträglichen organischen Säure, eines Aromas oder von beidem enthält. Bevorzugt enthält der erfindungsgemäße Fondant 0,01 bis 3 Gewichts-%, vorzugsweise 0,01 bis 1 Gewichts-%, insbesondere 0,01 bis 0,8 Gewichts-% (Gesamtgewicht Säure bezogen auf Trockensubstanz des Fondants) einer lebensmittelverträglichen organischen Säure, eines Aromas oder von beidem. Besonders bevorzugt ist die lebensmittelverträgliche organische Säure Zitronensäure, Sorbinsäure oder Laktobionsäure. Die Säuren können natürlich auch in Form ihrer Salze zugesetzt werden. Bevorzugt enthält der erfindungsgemäße Fondant 0,01 bis 3 Gewichts-%, vorzugsweise 0,01 bis 1 Gewichts-%, insbesondere 0,01 bis 0,8 Gewichts-% (Gesamtgewicht Säure bezogen auf Trockensubstanz des Fondants) Zitronensäure. Derartige Produkte zeichnen sich durch ein besonders ausgewogenes Geschmacksprofil aus.

Bevorzugt enthält der erfindungsgemäße Fondant Kaliumsorbat. Bevorzugt enthält der erfindungsgemäße Fondant 0,01 bis 3 Gewichts-%, vorzugsweise 0,01 bis 1 Gewichts-%, insbesondere 0,01 bis 0,8 Gewichts-% (Gesamtgewicht Säure bezogen auf Trockensubstanz des Fondants) Kaliumsorbat.

Es kann auch vorgesehen sein, dass der erfindungsgemäße Fondant Lebensmittelfarbe enthält.

In einer bevorzugten Ausführungsform wird aus dem erfindungemäßen Fondant eine transparente Glasur gebildet. In einer bevorzugten Ausführungsform wird der erfindungemäße Fondant durch das Trocknen transparent.

Gegenstand der Erfindung ist auch ein Verfahren zur Herstellung eines Fondants, insbesondere eines erfindungsgemäßen Fondants, wobei in einem ersten Verfahrensschritt Saccharose in einer nicht-kristallinen Phase, enthaltend Isomaltulose und Wasser, gelöst wird und in einem zweiten Verfahrensschritt kristalline Isomaltulose in die im ersten Verfahrensschritt erhaltene Lösung gegeben wird, wobei ein Fondant erhalten wird.

In einer bevorzugten Ausführungsform wird die Saccharose im ersten Verfahrensschritt zu einer gesättigten Isomaltuloselösung gegeben. Durch die Zugabe der Saccharose wird dann ein geringer teil der gelösten Isomaltulose verdrängt und kristallisiert aus. Dieser Mengenanteil an auskristallisierter Isomaltulose ist jedoch im Vergleich zu dem Mengenanteil der im zweiten Verfahrensschritt zugegeben kristallinen Isomaltulose, die nicht in Lösung geht, sehr gering und vernachlässigbar.

Das Verfahren unterscheidet sich von herkömmlichen Verfahren insbesondere auch dadurch, dass die kristalline Phase nicht durch Auskristallisieren gewonnen wird sondern durch Zugabe von kristalliner Isomaltulose zur nicht-kristallinen Phase. Die kristalline Isomaltulose löst sich nicht sondern bleibt als kristalline Phase erhalten.

Beim Auskristallisieren in herkömmlichen Verfahren entstehen nur feine Kristalle. Diese eignen sich aber nicht zur Herstellung von transparenten Glasuren aus den Fondants. Durch die erfindungsgemäße Zugabe der Isomaltulose-Kristalle kann aber in vorteilhafter Weise die Kristallgröße frei gewählt werden und somit die spätere Erscheinung der aus dem Fondant gebildeten Glasur bestimmt werden. Es können auch grobe Isomaltulose-Kristalle im zweiten Verfahrensschritt hinzugegeben werden, so dass aus dem erhaltenen Fondant eine transparente Glasur entstehen kann.

In einer bevorzugten Ausführungsform wird im zweiten Schritt kristalline Isomaltulose zugegeben, wobei mindestens 50 Gewichts-%, mehr bevorzugt mindestens 75 Gewichts-% der Kristalle eine Korngröße von mindestens 0,1 mm haben.

In einer bevorzugten Ausführungsform haben mindestens 80 Gewichts-% der Isomaltulose-Kristalle eine Korngröße von mindestens 0,08 mm. In einer bevorzugten Ausführungsform haben mindestens 80 Gewichts-% der Kristalle eine Korngröße von mindestens 0,1 mm. In einer bevorzugten Ausführungsform haben mindestens 80 Gewichts-% der Isomaltulose-Kristalle eine Korngröße von mindestens 0,1 mm.

Bevorzugte Mengen und Mengenverhältnisse an Isomaltulose, Saccharose und anderen Kohlenhydraten, Zuckern und Stoffen im erfindungsgemäßen Verfahren ergeben sich aus den bevorzugten Angaben zu dem erfindungsgemäßen Fondant.

Besonders bevorzugt wird die Saccharose im ersten Verfahrensschritt und die kristalline Isomaltulose im zweiten Verfahrensschritt in solchen Mengenanteilen zur nicht-kristallinen Phase hinzugegeben, dass das Mengenverhältnis der Isomaltulose und der Saccharose in der nicht-kristallinen Phase (bezogen auf das Gesamtgewicht der Isomaltulose und Saccharose in der nicht-kristallinen Phase) von 20 zu 80 bis 45 zu 55 beträgt, wobei gleichzeitig das Mengenverhältnis der Isomaltulose und der Saccharose im Fondant (bezogen auf das Gesamtgewicht der Isomaltulose und Saccharose im Fondant) von 30 zu 70 bis 85 zu 15 beträgt.

In einer bevorzugten Ausführungsform wird im ersten Schritt kristalline Saccharose gelöst.

In einer bevorzugten Ausführungsform umfasst der erste Verfahrensschritt folgende Teilschritte: - Zugeben eines Verdickungsmittels zu der nicht-kristallinen Phase; -Erhitzen der nicht-kristallinen Phase auf 80 bis 98°C; -Lösen der Saccharose in der nicht-kristallinen Phase; -Absenken der Temperatur der nicht-kristallinen Phase auf 40 bis 70°C, besonders bevorzugt auf 55 bis 65°C;

In einer bevorzugten Ausführungsform wird die kristalline Isomaltulose im zweiten Schritt bei einer Temperatur von 40 bis 70°C, besonders bevorzugt bei einer Temperatur von 55 bis 65°C in die im ersten Verfahrensschritt erhaltene Lösung gegeben.

In einer bevorzugten Ausführungsform umfasst das Verfahren folgende Schritte:
a) Zugeben eines Verdickungsmittels zu der nicht-kristallinen Phase, enthaltend Isomaltulose und Wasser;
b) Erhitzen der nicht-kristallinen Phase auf 80 bis 98°C bis das Verdickungsmittel gelöst ist;
c) Lösen der Saccharose in der nicht-kristallinen Phase;
d) Absenken der Temperatur der nicht-kristallinen Phase auf 40 bis 70°C;
e) Zugeben von kristalliner Isomaltulose in die in Schritt d) temperierte Lösung,
wobei am Ende des Verfahrens ein Fondant erhalten wird.

Eine bevorzugte Ausführungsform des Verfahrens enthält zusätzlich die Schritte:
f) Zugeben von mindestens einem Konservierungsmittel und/oder mindestens einer organischen Säure, bevorzugt Zitronensäure und/oder Kaliumsorbat;
g) Erhalten eines Fondants.
In einer alternativen Ausführungsform können die Schritte e) und f) vertauscht sein. Es kann also vorgesehen sein, das mindestens eine Konservierungsmittel vor der kristallinen Isomaltulose in die in Schritt d) temperierte Lösung zuzugeben.

In einer alternativen Ausführungsform kann auch mindestens ein Aroma hinzugefügt werden. Das mindestens eine Aroma kann insbesondere in Schritt f) zusätzlich zu dem mindestens einen Konservierungsmittel und/oder der mindestens einen organischen Säure hinzugegeben werden.

In einer alternativen Ausführungsform werden die Schritte a) und b) durch folgende Schritte a1) und b1) ersetzt:
a1) Zugeben von Isomaltulose und eines Verdickungsmittels zu Wasser;
b1) Erhitzen des Wassers auf 80 bis 98°C bis das Verdickungsmittel und die Isomaltulose gelöst ist, wodurch eine nicht-kristalline Phase erhalten wird.

Wenn nötig kann ein durch das Erhitzen hervorgerufener Wasserverlust vor dem zweiten Schritt oder vor Schritt c) ausgeglichen werden.

Gegenstand der Erfindung ist auch ein Fondant, eine Glasur, ein Überzug oder eine Gebäckfüllung, erhältlich nach dem erfindungsgemäßen Verfahren. Gegenstand der Erfindung ist auch ein Fondant, eine Glasur oder eine Gebäckfüllung, erhalten durch das erfindungsgemäße Verfahren. Ein solcher Fondant oder eine solche Gebäckfüllung kann von Fondants aus dem Stand der Technik durch die Kristallgröße der kristallinen Phase und/oder durch die Mengenverteilung der Isomaltulose und Saccharose in der nicht-kristallinen Phase und/oder im Fondant unterschieden werden. Eine solche Glasur und ein solcher Überzug kann von Glasuren und Überzügen aus dem Stand der Technik durch die Kristallgröße der kristallinen Isomaltulose und/oder durch die Mengenverteilung der Isomaltulose und Saccharose im Fondant und/oder durch eine reduzierte Klebrigkeit und längere Haltbarkeit unterschieden werden.

Gegenstand der Erfindung ist auch die Verwendung des erfindungsgemäßen Fondants als Glasur, Überzug oder Füllung von Nahrungs- oder Genussmitteln, insbesondere Backwaren oder Süßwaren.

Gegenstand der vorliegenden Erfindung ist insbesondere auch die Verwendung des erfindungsgemäßen Fondants als Überzugsfondant, insbesondere als Glazing, für Siedegebäcke oder Fettgebäcke, zum Beispiel Donuts. In einer besonders bevorzugten Ausführungsform der vorliegenden Erfindung wird der erfindungsgemäße Fondant zur Glasierung von Backwaren, insbesondere Siedegebäcken, Fettgebäcken, Donuts, Kuchen, Torten, Keksen, Waffeln, Konditoreiprodukten, Patisserieprodukten oder ähnlichem verwendet.

Nahrungs- oder Genussmittel, insbesondere Backware oder Süßware, das vollständig oder teilweise mit einem erfindungsgemäßen Fondant überzogen ist. Nahrungs- oder Genussmittel, das vollständig oder teilweise mit einer Glasur oder einem Überzug erhalten aus einem erfindungsgemäßen Fondant überzogen ist. Gegenstand der Erfindung ist auch ein Nahrungs- und Genussmittel, insbesondere eine Backware, die vollständig oder teilweise mit dem erfindungsgemäßen Fondant überzogen worden ist, wobei der Fondant bevorzugt nach Überziehen und Trocken als Glasur transparent ist.

Bevorzugt sind die Nahrungs- und Genussmittel Backwaren, insbesondere Siedegebäcken, Fettgebäcken, Donuts, Kuchen, Torten, Keksen, Waffeln, Konditoreiprodukten, Patisserieprodukten oder ähnliches.

Die vorliegende Erfindung betrifft aber alternativ auch die Verwendung des erfindungsgemäßen Fondants als Füllung, insbesondere von Nahrungs- und Genussmitteln, insbesondere Süßwaren, insbesondere Süßigkeiten, wie Konfekt oder Konditoreiprodukten. In besonders bevorzugter Ausführungsform kann der Fondant der vorliegenden Erfindung daher als Füllung von zum Beispiel Schokoladeprodukten, Konditoreiprodukten, Patisserieprodukten, Pralinen, Konfekt oder ähnlichem eingesetzt werden.

Gegenstand der Erfindung ist auch ein Nahrungs- oder Genussmittel, insbesondere eine Süßware, die einen Fondant der vorliegenden Erfindung enthält.

Weitere vorteilhafte Ausgestaltungen der Erfindung ergeben sich aus den Unteransprüchen.

Die vorliegende Erfindung wird in den folgenden Beispielen näher erläutert, wobei diese nicht einschränkend zu verstehen sind.

### Beispiel 1: Herstellverfahren für einen erfindungsgemäßen Fondant:

a) Herstellen einer gesättigten Isomaltulose-Lösung
b) Zugeben von Agar-Agar als Verdickungsmittel in die gesättigte Isomaltulose-Lösung und erhitzen auf 95°C
c) Halten des Ansatzes über 2 Minuten bei 95°C, um das Verdickungsmittel (Agar-Agar) vollständig zu lösen. Anschließend den Wasserverlust ausgleichen
d) Zugeben der Saccharose in den Ansatz und lösen. Halten der Temperatur auf ca. 60°C (Schritt zur aw-Wert-Reduzierung)
e) Zugeben der kristallinen Isomaltulose bei 60°C. Die Kristalle lösen sich nicht. Die Temperatur sinkt auf ca. 50°C
f) Zugeben von Zitronensäure und Kaliumsorbat

### Beispiel 2: Rezepturen:

### Rezeptur 1:

| | |
|---|---|
| Isomaltulose für gesättigte Lösung: | 10,8 g |
| Isomaltulose für kristalline Phase: | 37,6 g |
| Saccharose: | 30,6 g |
| Wasser: | 20,5 g |
| Agar-Agar: | 0,3 g |
| Zitronensäure: | 0,1 g |
| Kaliumsorbat: | 0,1 g |

### Rezeptur 2:

| | |
|---|---|
| Isomaltulose für gesättigte Lösung: | 10,8 g |
| Isomaltulose für kristalline Phase: | 41,5 g |
| Saccharose: | 26,7 g |
| Wasser: | 20,5 g |
| Agar-Agar: | 0,3 g |
| Zitronensäure: | 0,1 g |
| Kaliumsorbat: | 0,1 g |

### Rezeptur 3:

| | |
|---|---|
| Isomaltulose für gesättigte Lösung: | 10,8 g |
| Isomaltulose für kristalline Phase: | 45,3 g |
| Saccharose: | 22,9 g |
| Wasser: | 20,5 g |
| Agar-Agar: | 0,3 g |
| Zitronensäure: | 0,1 g |
| Kaliumsorbat: | 0,1 g |

### Rezeptur 4:

| | |
|---|---|
| Isomaltulose für gesättigte Lösung: | 10,8 g |
| Isomaltulose für kristalline Phase: | 5,7 g |
| Saccharose: | 62,5 g |
| Wasser: | 20,5 g |
| Agar-Agar: | 0,3 g |
| Zitronensäure: | 0,1 g |
| Kaliumsorbat: | 0,1 g |

### Rezeptur 5:

| | |
|---|---|
| Isomaltulose für gesättigte Lösung: | 10,8 g |
| Isomaltulose für kristalline Phase: | 60,6 g |
| Saccharose: | 7,6 g |
| Wasser: | 20,5 g |
| Agar-Agar: | 0,3 g |
| Zitronensäure: | 0,1 g |
| Kaliumsorbat: | 0,1 g |

Die Gewichts- und Mengenangaben beziehen sich auf g Hg (Gramm Handelsgewicht). Daher ist bei den Angaben für Isomaltulose das gebundene Kristallwasser mit enthalten.

Die Rezepturen wurden wie in Beispiel 1 gezeigt zu Fondants verarbeitet. Die Fondants wurden auf Donuts aufgetragen und als Glasur getrocknet.

Bevorzugt sind die Rezepturen 1, 2 und 3. Sie führen zu Glasuren, die über einen Lagerungszeitraum von 8 Tagen noch nicht klebrig werden, keine oder nur kaum Feuchtigkeitsbildung zeigen und gleichzeitig keine oder kaum eine Verschlechterung der Transparenz zeigen.

### Beispiel 3: Berechnung der Süßkraft von Rezeptur 1:

Die Süßkraft der Isomaltulose beträgt 40%, daraus ergibt sich ein Faktor von 0,4. Süßkraft der Saccharose beträgt 100%, daraus ergibt sich ein Faktor 1. Die Berechnung der Süßkraft der Rezeptur 1 bezieht sich auf das Handelsgewicht (HG).

Süßkraft Referenz Glasur auf Saccharose-Basis = 71,4

Süßkraft Rezeptur 1 = (10,8_{(Menge Hg Isomalulose gesattigte Lösung)} x0,4) + (37,6_{(Menge Hg Isomalulose kristallin)}x0,4) + (30,6_{(Menge Saccharose)}x1)

Süßkraft Rezeptur 1 = (4,32) + (15,04) + (30,6)

Süßkraft Rezeptur 1 = 49,96

Die Glasur aus Rezeptur 1 erreicht damit 70% der Süße des Referenzmusters.

Die Süßkraft der Rezeptur 1 führt zu einer angenehmen und ausreichenden Süße.

### Beispiel 4: aw-Werte für unterschiedliche nicht-kristalline Phasen:

| Proben-ID | 0 | 1 | 2 | 3 | 4 | 5 | 6 | 7 | 8 | 9 | 10 |
|---|---|---|---|---|---|---|---|---|---|---|---|
| Gesättigte Isomaltuloselösung [g] | 100 | 80 | 75 | 70 | 65 | 60 | 55 | 50 | 45 | 40 | 35 |
| Saccharose [g] | 0 | 20 | 25 | 30 | 35 | 40 | 45 | 50 | 55 | 60 | 65 |
| Isomaltulose (gemessener Wert, HPLC-NH₂) [g/100g] | 32,2 | 24,3 | 25,9 | 20,8 | 20,3 | 18,1 | 17,1 | 17,7 | 14,4 | 13,7 | 12,1 |
| Saccharose (gemessener Wert, HPLC-NH₂) [g/100g] | 0 | 19,6 | 27,8 | 29,0 | 35.0 | 40.4 | 45.1 | 54.6 | 53.1 | 54.5 | 56.7 |
| Trockensubstanz [g/100g] | 32,2 | 43.9 | 53.7 | 49.8 | 55.3 | 58.5 | 62.2 | 72.3 | 67.5 | 68.2 | 68.8 |
| Wasser [g/100g] | 67,8 | 56.1 | 46.3 | 50.2 | 44.7 | 41.5 | 37.8 | 27,7 | 32.5 | 31,8 | 31.2 |
| a_{w} | 0,95 | 0.95 | 0.95 | 0.94 | 0.93 | 0.92 | 0.91 | 0.90 | 0.89 | 0.87 | 0.84 |

Durch das Verhältnis der Isomaltulose- und Saccharosemenge in der nicht-kristallinen Phase kann ein gewünschter aw-Wert eingestellt werden. Für Glasuren für Gebäck eignen sich besonders gut die Proben 3 bis 8 mit einem aw-Wert von 0,94 bis 0,89.

## Patentansprüche

1. Fondant, umfassend ein Zuckersystem aus einer ersten nicht-kristallinen Phase und eine zweiten kristallinen Phase, wobei die nicht-kristalline Phase Isomaltulose und Saccharose enthält und wobei die kristalline Phase Isomaltulose enthält.

2. Fondant nach Anspruch 1, wobei das Mengenverhältnis der Isomaltulose und der Saccharose in der nicht-kristallinen Phase (bezogen auf das Gesamtgewicht der Isomaltulose und Saccharose in der nicht-kristallinen Phase) von 20 zu 80 bis 45 zu 55 beträgt.

3. Fondant nach einem der vorstehenden Ansprüche, wobei das Mengenverhältnis der Isomaltulose und der Saccharose im Fondant (bezogen auf das Gesamtgewicht der Isomaltulose und Saccharose im Fondant) von 25 zu 75 bis 85 zu 15 beträgt.

4. Fondant nach einem der vorstehenden Ansprüche, wobei der Anteil der nicht-kristallinen Phase an der Gesamtkohlenhydratzusammensetzung des Fondants (Gewicht TS der nicht-kristallinen Phase bezogen auf Gesamtgewicht TS der Kohlenhydrate des Fondants) 30 bis 70 Gewichts-% beträgt.

5. Fondant nach einem der vorstehenden Ansprüche, wobei mindestens 80% Gewichts-% der Kristalle der kristallinen Phase eine Korngröße von mindestens 0,1 mm haben.

6. Fondant nach einem der vorstehenden Ansprüche, wobei die nicht-kristalline Phase mindestens 20 Gewichts-% Isomaltulose (Gewicht TS der Isomaltulose in der nicht-kristallinen Phase bezogen auf Gesamtgewicht TS der Kohlenhydrate in der nicht-kristallinen Phase) enthält.

7. Fondant nach einem der vorstehenden Ansprüche, wobei der Kohlenhydratanteil der nicht-kristallinen Phase zu mindestens 50 Gewichts-% aus einer Mischung aus Isomaltulose und Saccharose gebildet wird.

8. Fondant nach einem der vorstehenden Ansprüche, wobei der Fondant höchstens 3 Gewichts-% Glucosesirup enthält.

9. Fondant nach einem der vorstehenden Ansprüche, wobei der Fondant 10 bis 40 Gewichts-% Wasser (bezogen auf Gesamtgewicht des Fondants) enthält.

10. Fondant nach einem der vorstehenden Ansprüche, wobei der Fondant 0,01 bis 0,6 Gewichts-% (Gesamtgewicht Verdickungsmittel bezogen auf TS des Fondants) Verdickungsmittel enthält.

11. Fondant nach einem der vorstehenden Ansprüche, wobei der Fondant 0,01 bis 3 Gewichts-% (bezogen auf TS des Fondants) mindestens eines lebensmittelverträglichen Konservierungsmittels, mindestens eines Aromas oder von beidem enthält.

12. Verfahren zur Herstellung eines Fondants, insbesondere eines Fondants gemäß der Ansprüche 1 bis 11, wobei in einem ersten Verfahrensschritt Saccharose in einer nicht-kristallinen Phase, enthaltend Isomaltulose und Wasser, gelöst wird und in einem zweiten Verfahrensschritt kristalline Isomaltulose in die im ersten Verfahrensschritt erhaltene Lösung gegeben wird, wobei ein Fondant erhalten wird.

13. Verfahren nach Anspruch 12, wobei der erste Verfahrensschritt folgende Teilschritte umfasst:
- Zugeben eines Verdickungsmittels zu der nicht-kristallinen Phase;
- Erhitzen der nicht-kristallinen Phase auf 80 bis 98°C;
- Lösen der Saccharose in der nicht-kristallinen Phase;
- Absenken der Temperatur der nicht-kristallinen Phase auf 40 bis 70°C;

14. Verfahren nach einem der Ansprüche 12 oder 13, wobei die kristalline Isomaltulose im zweiten Schritt bei einer Temperatur von 40 bis 70°C in die im ersten Verfahrensschritt erhaltene Lösung gegeben wird.

15. Fondant, Glasur oder Gebäckfüllung, erhältlich nach einem Verfahren gemäß einem der Ansprüche 12 bis 14.

16. Verwendung des in einem der Ansprüche 1 bis 11 oder 15 charakterisierten Fondants als Glasur, Überzug oder Füllung von Nahrungs- oder Genussmitteln, insbesondere Backwaren oder Süßwaren.

17. Nahrungs- oder Genussmittel, das vollständig oder teilweise mit einem Fondant gemäß einem der Ansprüche 1 bis 11 überzogen ist.
